# EUROPEAN PATENT SPECIFICATION

(11) **EP 2 163 938 B1**
(45) Date of publication and mention of the grant of the patent: **30.03.2011**
(21) Application number: 09170118.5
(22) Date of filing: 11.09.2009
(51) Int. Cl.: G02C 5/22

(54) **Double action elastic hinge for spectacles**
Elastisches Doppelgelenk für Brillen
Charnière élastique double action pour lunettes

(30) Priority: 12.09.2008 IT UD20080195
(43) Date of publication of application: 17.03.2010
(73) Proprietor: Visottica Industrie S.p.A. con unico socio, 31058 Susegana (TV) (IT)
(72) Inventor: Montalban, Rinaldo, 30100 Venezia (IT)
(74) Representative: Petraz, Gilberto Luigi

(56) References cited:
- EP-A- 0 239 011
- EP-A- 0 736 790
- EP-A- 0 952 475
- FR-A- 2 665 268
- US-A- 4 991 258

## Description

### FIELD OF THE INVENTION

The present invention concerns a double action elastic hinge for spectacles, usable to articulate a temple to a lug or front piece of a frame for spectacles.

### BACKGROUND OF THE INVENTION

Hinges for spectacles of the elastic or flexible type are known, which allow an extra-opening travel of the temple and the elastic return from the condition of extra opening of the temple: such hinges are typically formed by two articulation elements hinged together by means of relative eyelets, of which a first articulation element is associated with the temple and a second articulation element or front piece of the hinge is associated with the lug of the spectacles.

Normally, the first articulation element is formed by a box-like body associated with the temple and by a slider elastically sliding inside the box-like body, whose external protruding portion constitutes the relative hinging eyelet.

Among such hinges, solutions are known with a "double action", in which as well as the elastic return from the condition of extra opening, there is also the snap action provided from the position with the open temple to that of the closed temple. To this purpose, the second articulation element is shaped with a cam profile, which cooperates with the front plane of the box-like body, to determine the snap action of the hinge.

The snap action facilitates obtaining two positions of stable balance of the hinge, that is, with the temple open and with the temple closed. During the reciprocal movement, the profile of the cam of the of the front articulation element and the front plane of the box-like body slide along the surface of the other, in contrast with the action of the spring associated with the slider.

When the hinge, in its rotation, exceeds a certain angle, we will have an elastic return of the spring and the hinge snaps into the closed position.

In assembling the slider, the spring is assembled already compressed (about 1 mm) to confer upon it most of the preloading, which depends on the characteristics of the spring itself (external diameter, diameter of the wire, number of coils, etc...).

The assembled slider is inserted into the box-like body, with a slight distance or gap, (1 - 2 tenths of a millimeter) between the box and slider.

When the slider is hinged with the relative front articulation element, the two relative eyelets do not coincide, so that, during assembly, the slider is further removed by a determinate amount from the box-like body, by applying a preload to the spring (2 - 3 tenths of a mm).

When the hinge is assembled, we will therefore have a traction or drawing of the hinge, given by the coupling of the box, slider and front articulation element, that is correlated to the length by which the slider is extracted from the box.

This last value is given by the sum of said slight gap between box and slider and said further preload value of the spring due to the misalignment of the eyelets.

In the passage between the two balanced positions, the geometry of the cam of the front articulation element allows the snap action of the hinge. In the intermediate position we will have maximum distance between the front plane of the box-like body and the pivoting center of the two articulation elements, which determines a further emergence of the slider from the box, that is, a further compression of the spring, to a determinate value, greater than the above value which determines, or is indicative of, the traction or drawing of the spring.

It is precisely this value of the emergence of the slider that determines the maximum traction or drawing of the flexible hinge in its passage between open temple and closed temple and therefore it is indicative of the quality of the snap action.

Other known solutions are elastic hinges with "wedge articulation", such as for example those described in the patent application UD2007A000193 in the name of the present Applicant, or in the patent applications FR-A-2690760 and EP-A-0736790, in which the opening/closing movement is the same as that described above, with the difference that the opening/closing positions, and also the intermediate position, are evaluated differently.

In these "wedge articulation" solutions, due to the particular geometry of the box and the front articulation element, the traction values of the slider emerging from the box are lower than in traditional elastic hinges, because the value that determines the maximum traction or drawing of the hinge, in this case, does not correspond to the actual work between the surfaces of the box and the front articulation element. In fact, the distances between the pivoting center and the front plane of the box-like body vary along an axis different from the axis along which the movement of the slider occurs, consequently the actual emergence of the slider is less than that of a traditional hinge.

Another known solution of elastic hinge is described in FR-A-2665268, in which the front surface of the box-like body is formed by two surfaces orthogonal to the axis of the temple and connected by a surface inclined with respect to the other two. Here the concept of the hinge is the same as the hinge with wedge articulation as previously described, with similar disadvantages.

The patent EP-B-0426947 is also known, which describes a hinge for spectacles in which the front surface of the box-like body is inclined toward the inside, to improve the guide of the cam of the front piece, which allows the snap action from the positions of closed temple to that of open temple. Furthermore, it has the disadvantage that travel is lost (and hence traction of the hinge) in the movement between open temple and closed temple. The solution described in another patent, EP-B-0952475, is the same as that in EP-B-0426947, and has the same disadvantages.

The field of components for spectacles, today, requires to reduce the bulk of elastic hinges, in terms of height, width and length, both of the box and also of the front articulation element, all of this while keeping unchanged the sensations of tractions and snap action that a traditional flexible hinge can have.

These objectives, for the reasons explained above, are not achieved by elastic hinges known in the state of the art.

In fact, the reduction in sizes of the hinge implies a reduction in the values of the distances of the front plane of the box-like body from the pivoting center of the eyelets, in the open/closed positions and the intermediate position, and consequently the traction or drawing values and maximum emergence of the slider in the intermediate position which, as we said, give the sensation of greater or lesser drawing of the hinge and hence the quality of the "snap action". Furthermore, the reduction in said values cannot be counter-balanced by a possible increase in the rigidity of the spring (for example by increasing its external diameter, the diameter of the wire, the number of coils or the pitch), because the increase in bulk of the spring is reflected in the increase in bulk of the hinge.

Purpose of the present invention is to achieve a double action elastic hinge for spectacles that has reduced bulk in terms of height, width and length, keeping the sensations of traction or drawing and of snap action unchanged, that a traditional flexible hinge can have.

The Applicant has devised, tested and embodied the present invention to overcome the shortcomings of the state of the articulation element and to obtain these and other purposes and advantages.

### SUMMARY OF THE INVENTION

The present invention is set forth and characterized in the independent claims, while the dependent claims describe other characteristics of the invention or variants to the main inventive idea.

In accordance with the above purpose, a double action elastic hinge for spectacles according to the present invention comprises, associated with the temple and the lug of the spectacles, two articulation elements reciprocally hinged to allow the articulation of the temple with respect to the lug between the open and closed positions.

A first articulation element comprises a box-like body that has a first front surface and inside which an elastic slider is slidingly housed, and a second articulation element constrained to the elastic slider and that has a second shaped front surface with a cam region, which is able to slide on said first front surface.

According to the present invention, an intermediate condition is provided, or unstable balance condition, in the movement of the temple and lug in which the cam region determines a maximum emergence of the elastic slider from the box-like body.

According to a characteristic feature of the present invention, the first front surface has a convex shaped profile with a region protruding toward the outside of the box-like body.

According to the present invention, the second front region is shaped in mating fashion with the first front surface so as to define a concavity delimited on one side by the cam region and inside which the protruding region, in the unstable condition in which the temple is open with respect to the lug, is located, advantageously with same-shape coupling.

According to another characteristic feature of the present invention, in said intermediate condition the protruding region cooperates directly with the cam region to increase the maximum emergence of the elastic slider.

By double action we mean that the double action elastic hinge according to the present invention not only allows the elastic return from the condition of extra opening, but also a snap action from the open temple position to the closed temple position.

According to a variant solution, said protruding region is made in a central position with respect to a housing axis of the elastic slider in the box-like body, in alignment with the axis of the hole around which the hinge is pivoted.

According to another variant solution, the protruding region is made in a decentralized position with respect to a housing axis of the elastic slider in the box-like body, that is, with respect to the axis of the hole around which the hinge is pivoted.

According to one solution of the present invention, the first front surface is defined by two inclined planes converging toward the outside of the box-like body, so that the protruding region is defined by a protruding edge or "nose".

According to another solution, the first front surface is a profile with a curvilinear development, for example rounded, so that said protruding region is defined by a point of maximum protrusion, for example in correspondence with the radius aligned with the housing axis of the slider.

According to one embodiment, the cam region protrudes from the bulk of the second articulation element and, in its passage from one to the other of the open and closed positions, is able to selectively cooperate with the first front surface to remove the elastic slider from the box-like body.

According to the present invention, the elastic slider provides an elastic means in the normally pre-loaded position, which is then compressed when the elastic slider is removed from the box-like body, the entity of the pre-load being able to return the elastic means, and hence the elastic slider, to their position.

In the intermediate condition, the elastic means is able to further compress with respect to its normally preloaded position, and passing over or beyond the intermediate condition is able to cause the return of the elastic means to its preloaded position, causing one or the other of the open or closed positions to be reached with a snap movement.

With the present invention we obtain a greater extraction travel of the elastic slider with respect to traditional elastic hinges, which determines a greater tension on the elastic means that exerts a greater elastic return force and hence we obtain a drawing and snap action of greater effectiveness.

In this way, the hinge according to the present invention has reduced bulk in terms of height, width and length, since given the same characteristics of the elastic means we have a greater effectiveness in returning to position, keeping unchanged or improving the sensations of traction or drawing and snap action, that a traditional flexible hinge can have.

Another advantage of the geometry described above is that the whole greater travel possible is used to obtain the desired drawing values since the maximum traction of the hinge in this case corresponds to the actual work of the surface of the box-like body and the second articulation element. In fact, the distances between the pivoting center and the front surface of the box-like body vary along an axis parallel to or coinciding with the axis along which the movement of the elastic slider occurs.

According to a variant, the protruding region is made in a central position with respect to the housing axis, in alignment with the axis of the hole around which the hinge is pivoted.

Alternatively, the protruding region is made in a decentralized position with respect to the pivoting axis, that is, with respect to the axis of the hole around which the hinge is pivoted.

According to one embodiment, the first front surface is defined by two inclined planes converging toward the outside of the box-like body, so that the protruding region is defined by a protruding edge or "nose".

The present invention is also applied, as well as to single sliders, to double or multiple elastic sliders.

### BRIEF DESCRIPTION OF THE DRAWINGS

These and other characteristics of the present invention will become apparent from the following description of a preferential form of embodiment, given as a non-restrictive example with reference to the attached drawings wherein:
- fig. 1 is a perspective view of a hinge according to the present invention, associated with a temple and a lug of spectacles;
- fig. 2 is a perspective view of a part of the hinge in fig. 1;
- figs. 3 and 4 are a plan representation, respectively in section and at sight, of the hinge in fig. 1 associated with a temple and a lug of spectacles in an open condition;
- figs. 5 and 6 are a plan representation, respectively in section and at sight, of the hinge in fig. 1 associated with a temple and a lug of spectacles in an intermediate condition;
- figs. 7 and 8 are a plan representation, respectively in section and at sight, of the hinge in fig. 1 associated with a temple and a lug of spectacles in an intermediate condition of maximum traction;
- fig. 8a is a representation of a variant of the hinge in fig. 1 in the condition shown in figs. 7 and 8;
- figs. 9 and 10 are a plan representation, respectively in section and at sight, of the hinge in fig. 1 associated with a temple and a lug of spectacles in another intermediate condition;
- figs. 11 and 12 are a plan representation, respectively in section and at sight, of the hinge in fig. 1 associated with a temple and a lug of spectacles in a closed condition;
- figs. 13a to 13e represent the sequence of some positions assumed by the hinge in fig. 1 from the open condition to the closed condition;
- fig. 14 is a perspective view of a variant of the hinge in fig. 1;
- fig. 15 is a part of the variant in fig. 14;
- fig. 16 is another variant of the hinge in fig. 1;
- fig. 17 is another variant of the hinge in fig. 1;
- fig. 18 is a section of the variant in fig. 17;
- fig. 19 is a schematic representation of how the profile of the hinge according to the present invention is made;
- fig. 20 is a schematic representation of a hinge according to the present invention;
- fig. 21 is a schematic representation of the hinge in fig. 20 in a rotated condition;
- fig. 22 is a comparative graph between the hinge according to the present invention and the traditional and wedge type hinges known in the state of the art, where the x-axis shows the angle of reciprocal angle between two articulation elements of the hinge and the y-axis shows the value of emergence of the slider from the box-like body, normalized with respect to the maximum value of emergence of traditional hinges, to which the value 1 is assigned.

### DETAILED DESCRIPTION OF A PREFERENTIAL FORM OF EMBODIMENT

With reference to the attached drawings, a double action elastic hinge 10 according to the present invention is applied to articulate reciprocally a temple 12 to a lug 14 of a frame for spectacles.

In particular, the hinge 10 according to the present invention is of the elasticized type, that is, able to allow an extra travel on opening of the temples 12 with a desired elastic return to facilitate the operations of putting on and wearing the spectacles. The double action elastic hinge 10 therefore allows, not only an elastic return from the condition of extra opening, but also a snap action from the position of open temple to that of closed temple.

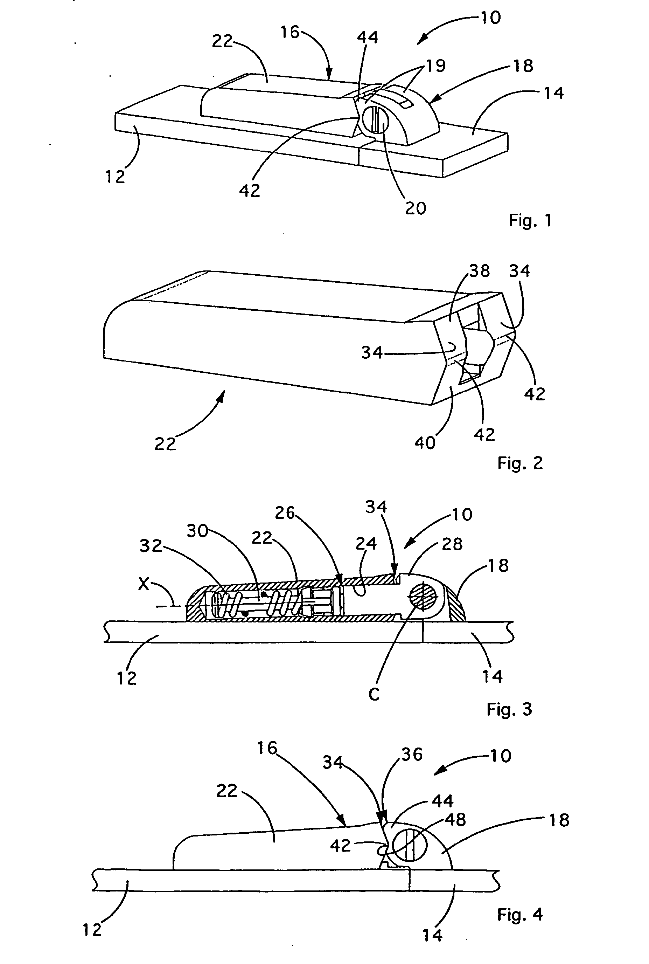

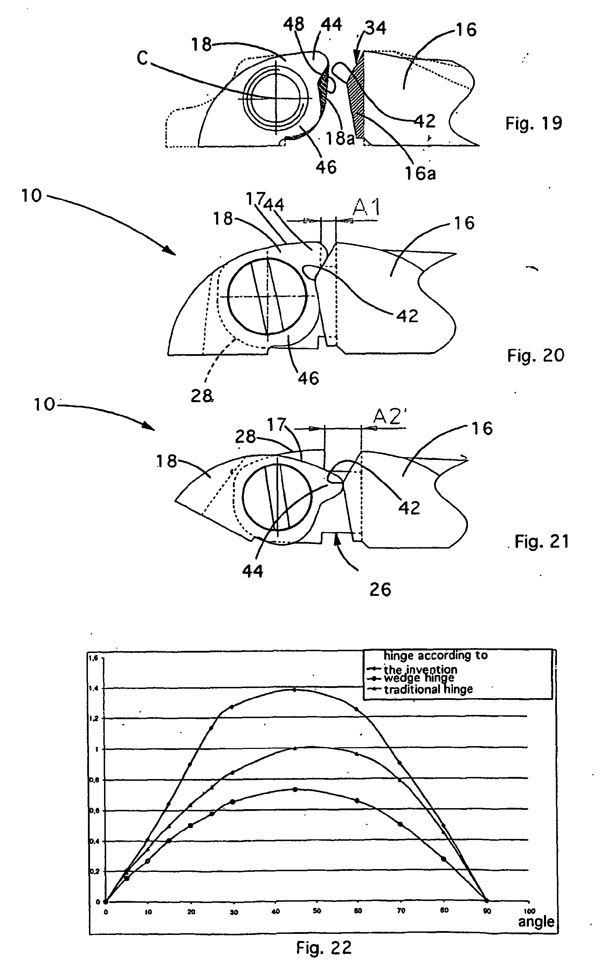

The hinge 10 (fig. 1) comprises traditionally two articulation elements, respectively a first 16, in this case associated with the temple 12, and a second 18, also called the front piece of the hinge, associated with the lug 14 of the spectacles, which are reciprocally pivoted to each other by means of a pin 20, for example a screw, in correspondence with a determinate pivoting center C (figs. 19, 20 and 21).

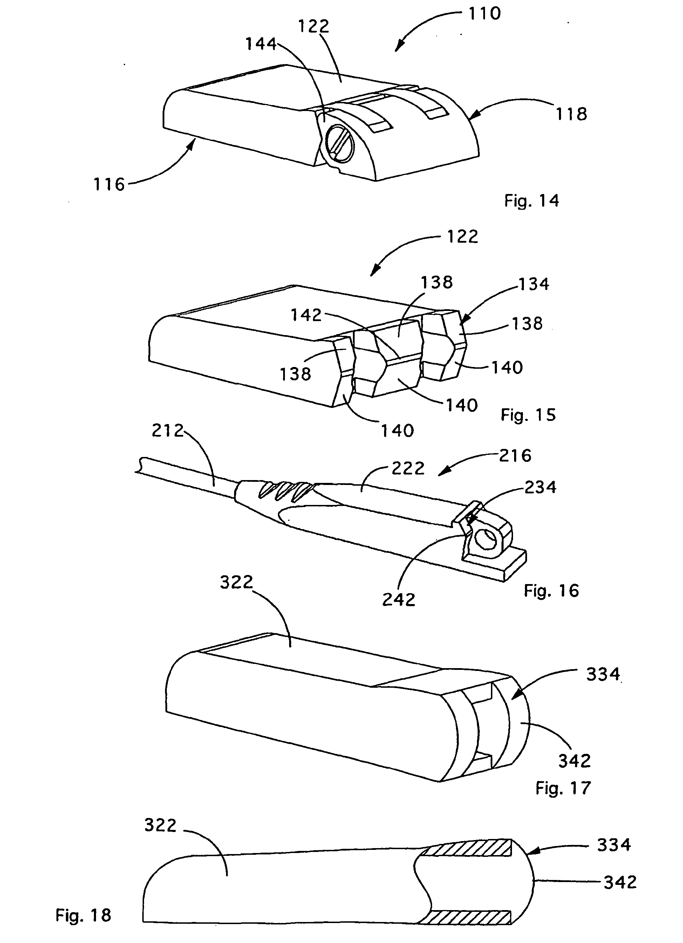

In the embodiment shown in figs. 1 - 13e, specific reference is made to an elastic hinge 10 of the type having two specific articulation elements 16 and 18, originally separated by the relative temple 12 and lug 14, but it cannot be excluded that the present invention can equally be applied to embodiments in which the various components of the hinge 10 are at least partly made directly on the temple 12 (fig. 16) and/or on the lug 14.

The first articulation element 16 comprises both a box-like body 22 (fig. 2), having a longitudinal cavity 24, and also an elastic slider 26 (fig. 3) housed at least partly inside the longitudinal cavity 24, in sliding manner along a relative housing axis X. The axis X along which the elastic slider 26 slides can be slightly inclined, for example by about 1° - 2°, so as to lower the height of the box-like body 22 in the rear zone.

The entity by which the elastic slider 26 protrudes from the box-like body 22, in the inactive condition, is indicated by the value A1 in fig. 20.

The elastic slider 26 substantially comprises at least:
- a hinging portion or eyelet 28 (fig. 3) with which the pivoting of corresponding eyelets 19 (fig. 1) of the second articulation element 18 is effected;
- a rod 30 made to the rear of the hinging portion 28 and disposed coaxial to the axis X in the longitudinal seating 24 and a helical spring 32 mounted coaxial on the rod 30 (fig. 3) and constrained thereto in a known manner and according to requirements.

The box-like body 22 has a first front surface 34 (figs. 3, 4, 5, 6, 7 and 8), substantially facing toward a corresponding second front surface 36 of the second articulation element 18 and from which, toward the inside of the box-like body 22, the longitudinal cavity 24 opens.

The first front surface 34 of the box-like body 22 is shaped convex, defined by two inclined planes 38, 40 converging frontally with respect to the box-like body 22, toward the outside of the latter, to define a protruding edge, or "nose" 42, substantially central with respect to the axis X.

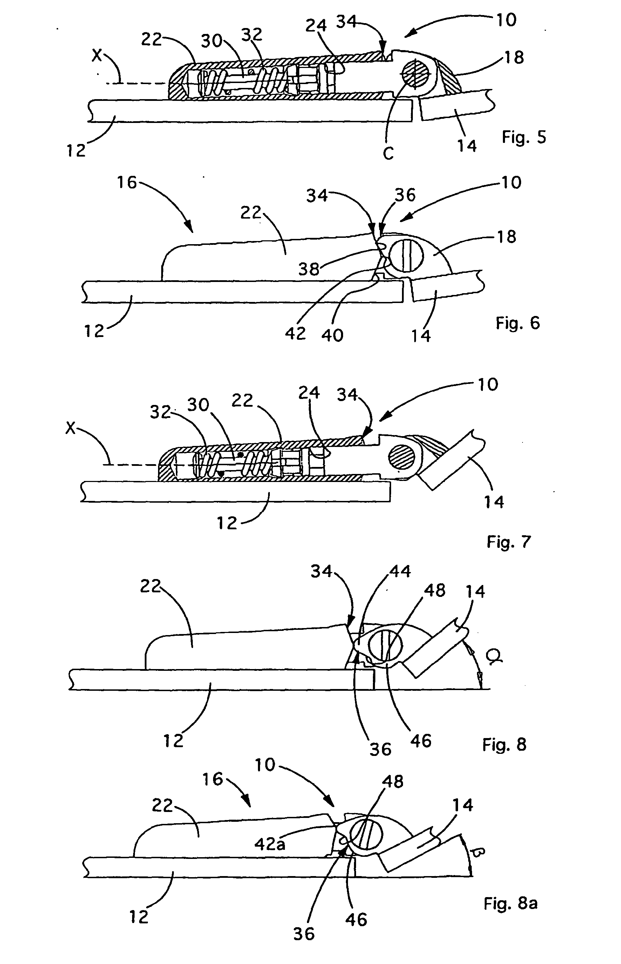

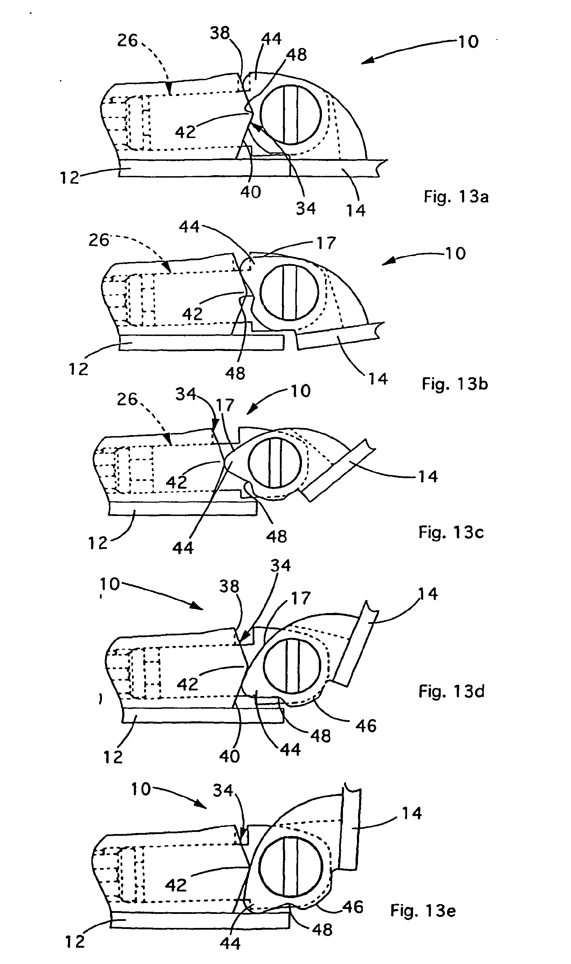

The second front surface 36 of the second articulation element 18 is shaped in a mating manner with the first front surface 34, that is, having a concavity delimited by two protuberances or crests 44, 46. In particular, there is a first protuberance or crest 44 which is more protruding and steep with respect to the second protuberance or crest 46 which is more contained (figs. 8, 13e, 20 and 21), which otherwise, when the temple is closed, would knock against the temple itself (fig. 13b).

The protuberances or crests 44 and 46 have planes converging toward the inside of the second articulation element 18, so as to define a throat or hollow 48, compatible in shape to house the protruding edge or "nose" 42, and the relative first planes 38, 40 that rest on the corresponding internal planes of the protuberances or crests 44, 46. Advantageously, in the open condition of the temple 12, when the protruding edge or "nose" 42 is positioned in the throat or hollow 48, it achieves a same-shape coupling with the latter.

In practice, the desired geometry for the first 34 and second 36 front surface is obtained, as can be seen schematically in fig. 19, with respect to a traditional flexible hinge, modifying the profiles of the two surfaces 34 and 36, by "adding" material 16a to the box-like body 22, thus creating an inclined plane with the protruding edge or "nose" 42 substantially in proximity with the center, or moved sideways according to requirements, and by "removing" the corresponding excess parts of material 18a of the box-like body 22 from the profile of the second articulation element 18 so as to form the throat or hollow 48.

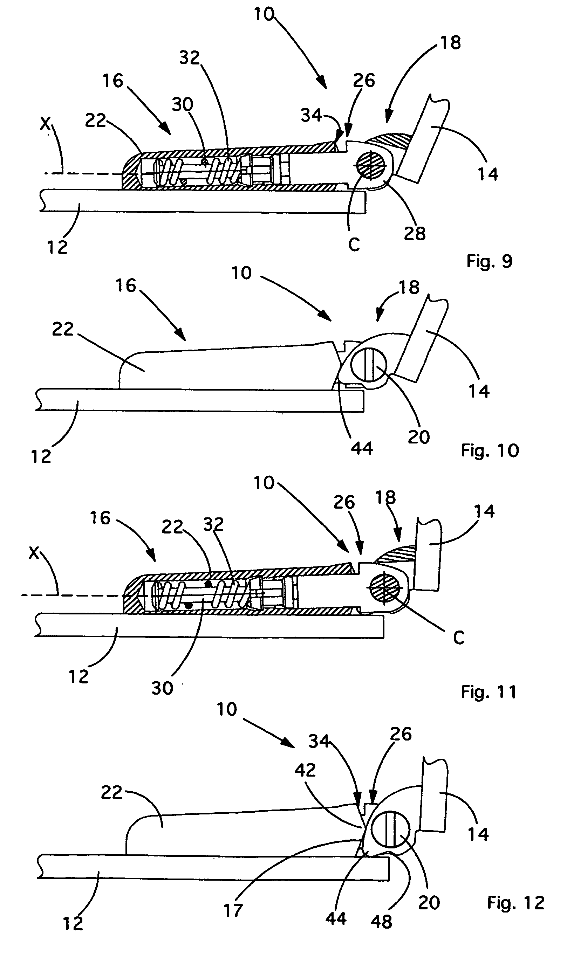

In the normal functioning of the hinge 10 two predefined stable limit positions of the temple 12 with respect to the lug 14 are thus identified, that is, an open position (figs. 1, 2, 3, 4 and 13a), characterized by an angle of about 0° between the first articulation element 16 and the second articulation element 18 and in which the protruding edge or "nose" 42 is housed in the throat or hollow 48, and a closed position (figs. 11, 12 and 13e), characterized by an angle of about 90° between the first articulation element 16 and the second articulation element 18, in which the external wall 17 of the second articulation element 18 rests on the inclined plane 40.

In passing from the open condition to the closed condition, the protuberance or crest 44 slides along the first front surface 34 (figs. 13a - 13e) and we also have a first intermediate condition of unstable balance (figs. 7, 8, 8a, 13c) which corresponds to the maximum emergence of the slider 26 from the box-like body 22, wherein the protruding edge or "nose" 42 abuts with the protuberance or crest 44 (see in detail fig. 13c), and also second dynamic intermediate positions, passing between the open position and the first intermediate position (figs. 5, 6 and 13b) and between the first intermediate position and the closed position (figs. 9, 10 and 13d).

In particular, the protuberance or crest 44 of the second front surface 36 acts as a cam with respect to the first front surface 34, determining with its rotation the linear displacement of the slider 26, which emerges from the box-like body 22, and the compression of the spring 32 that reacts, causing the snap action of the hinge, as the whole closes or opens. In the passage between the two positions, open and closed, the geometry of the second front surface 36, as we said, in cooperation with the first front surface 34, determines the snap action of the hinge 10. The entity of the emergence of the slider 26 in the unstable intermediate position determines the quality of the snap action of the hinge.

In fig. 20, A1 indicates the distance given by the sum of the distance or gap with which the slider 26 is assembled with respect to the box-like body 22, and the slight quantity by which the slider 26 is removed from the box-like body 22 during the assembly of the hinge 10, due to the slight staggering of the hinging portion or eyelet 28 with the relative eyelet 19 of the second articulation element 18 which, as is known, determines a further preloading of the spring 32.

The entity of the value A1 is therefore indicative of the traction or drawing of the spring 32.

In the unstable intermediate position, see in detail fig. 21, there is a further emergence of the slider 26 to a distance from the front surface 34 with a value indicated by A2, with the consequent further compression of the spring 32 (see also fig. 7, where the compression of the spring 32 compared with fig. 5 can be seen).

In figs. 19, 20 and 21 the protruding edge or "nose" 42 is shown decentralized with respect to the axis X, however it could also be central, without substantially changing the working principle of the invention.

The position of maximum emergence of the slider 26, and hence the snap action of the hinge, are reached when the protruding edge or "nose" 42 abuts on the protuberance or crest 44 (figs. 8 and 13c), at a determinate angle α, indicated for convenience in fig. 8, for example about 45°, but which can vary according to the position, central or decentralized, of the protruding edge or "nose" 42.

The value of A2 defines the maximum traction exerted by the spring 32 in the transition from the open position to the closed position of the temple 12 with respect to the lug 14.

Therefore, at the moment when the hinge 10 passes from the stable open position to the closed position, the present invention provides that the protuberance or crest 44 that acts as a cam slides along the plane 38 and then passes over the protruding edge or "nose" 42, and then goes to rest the external surface 17 of the second articulation element 18 against the inclined plane 40 of the first front surface 34 (the closing sequence shown in figs. 13a - 13e). Clearly we shall have the opposite in the passage between the stable closed position to the open position, with the protuberance 44 acting as a cam sliding along the inclined plane 40, then passing over the protruding edge or "nose" 42 and resting the planes 38, 40 on the relative planes defined by the crests 44, 46.

As can be seen in figs. 13a - 13e, the distances between the pivoting center C and the front surface 34 of the box-like body 22 vary along an axis parallel to or coinciding with the axis along which the slider 26 moves, allowing to exploit the whole extended emergence travel in order to obtain the maximum traction of the hinge.

In the condition of maximum emergence of the slider, first unstable condition, the second articulation element 18 is located in correspondence with the protruding edge or "nose" 42 of the box-like body 22, thus exploiting, for the compression travel of the spring 32, not only the profile of the second region 44 that acts as a cam as in tradition flexible hinges, but also the whole extension and development toward the outside of the first front surface 34, in particular of the protruding element or "nose" 42.

We therefore have a value A2 that is greater than the corresponding value obtained in traditional flexible hinges.

In this way, given the same conditions, the solution according to the present invention has a greater load, that is, a greater force of traction due to the greater compression of the spring 32, and therefore, in conclusion, a better snap action, compared with a traditional flexible hinge. Applicant has carried out experiments between the hinge according to the present invention, wedge type articulated hinges and traditional hinges, the results of which are shown in the graph in fig. 22, which describes the development of the emergence of the slider from the box (one distance), which is directly proportional to the traction force or drawing of the spring 32, according to the relative angle of rotation between the first 16 and the second 18 articulation element, normalized with respect to traditional hinges. The maximum value of drawing for the three types is obtained substantially in correspondence with an angle of about 45°, that is, half way, however the maximum value varies very much in the three cases. As can be seen in the graph, the hinge according to the present invention has a maximum traction or drawing value greater than the other two types of hinge and is about 1.4 times that of a traditional flexible hinge.

Similarly, given the same traction or drawing force, predetermined for the spring 32 as desired, it is possible to reduce the overall sizes of the hinge, without worsening the travel of the flexible slider.

Fig. 8a shows a variant in which the protruding edge or "nose" indicated by 42a is displaced with respect to the center, that is, with respect to axis X, in this case upward, thus varying the sensation of traction or drawing of the hinge experienced by the user. In this case the position of maximum emergence of the slider 26, and hence the snap action of the hinge, are reached at an angle β, less than angle α in fig. 8.

Although fig. 1 refers to a hinge with a single slider, the present invention is equally applicable to hinges with double slider, or generally multiple, as indicated by the reference number 110 in fig. 14 (hinge 110 formed by first articulation element 116 and second articulation element 118) and in fig. 15 (showing only the box-like body 122 for the double slider). Here again we have a first front surface 134 with a convex shape formed by two inclined planes 138, 140 converging in the external edge or "nose" 142. The protuberance or crest 144 cooperates with the first front surface 134, abutting in the first unstable condition (fig. 13c), on the external edge or "nose" 142, as previously described.

In the case shown in fig. 1, the box-like body 22 is attached external to the temple 12, on the internal side of the spectacles when the user is wearing them, however solutions also come within the spirit of the present invention in which a box-like body 222 of a first articulation element 216 is integrated with a temple 212 (integral flexible core, fig. 16). In fig. 16 the first front surface 234 can also be seen, with a convex shape, with the external edge or "nose" 242, which in this case is disposed in a decentralized position with respect to the axis X.

Figs. 17 and 18 show a variant solution in which, instead of a solution with a "nose" profile, the front plane of the box-like body 322 is provided with a rounded surface profile 334 (in this case an arc of a circumference) with a region of maximum protrusion 342 in correspondence with the central zone of the box-like body 322.

It is clear, however, that modifications and/or additions of parts may be made to the hinge 10, 110 as described heretofore, without departing from the field and scope of the present invention.

## Claims

1. Double action elastic hinge for spectacles, which comprises, associated with the temple (12, 112) and the lug (14) of the spectacles, two articulation elements (16, 116, 216; 18) reciprocally hinged to allow the articulation of the temple (12, 212) with respect to the lug (14) between the open and closed positions, of which a first articulation element (16, 116, 216) comprises a box-like body (22, 122, 222, 322) which has a first front surface (34, 134, 234, 334) and inside which an elastic slider (26) is slidingly housed, and a second articulation element (18) constrained to the elastic slider (26) and which has a second shaped front surface (36) with a cam region (44, 144) which is able to slide on said first front surface (34, 134, 234, 334), an intermediate condition being provided in the movement of the temple (12, 112) and lug (14) in which the cam region (44, 144) determines a maximum emergence (A2) of the elastic slider (26) from the box-like body (22, 122, 222, 322), **characterized in that** the first front surface (34, 134, 234, 334) has a convex shaped profile with a protruding region (42, 42a, 142, 242, 342) toward the outside of the box-like body (26), the second front surface (36) being shaped in a manner mating with the first front surface (34, 134, 234, 334) so as to define a concavity (48) delimited on one side by the cam region (44, 144) and inside which the protruding region (42, 42a, 142, 242, 342) is located in the stable condition in which the temple (12, 212) is open with respect to the lug (14).

2. Hinge as in claim 1, **characterized in that**, in said intermediate condition, the protruding region (42, 42a, 142, 242, 342) cooperates directly with the cam region (44, 144) in order to increase the value of maximum emergence (A2) of the elastic slider (26).

3. Hinge as in claim 1 or 2, **characterized in that** the protruding region (42, 142, 342) is made in a central position with respect to a housing axis (X) of the elastic slider (26) in the box-like body (22, 122).

4. Hinge as in claim 1 or 2, **characterized in that** the protruding region (42a, 242) is made in a decentralized position with respect to a housing axis (X) of the elastic slider (26) in the box-like body (22).

5. Hinge as in any claim hereinbefore, **characterized in that** the first front surface (34, 134, 234) is defined by two inclined planes (38, 138: 40, 140) converging toward the outside of the box-like body (22, 122, 222), so that said protruding region is defined by a protruding edge or "nose" (42, 42a, 142, 242).

6. Hinge as in any claim from 1 to 4, **characterized in that** the first front surface (334) is a profile with a curvilinear development, so that said protruding region is defined by a point of maximum protrusion (342).

7. Hinge as in any claim hereinbefore, **characterized in that** the cam region (44, 144) protrudes from the bulk of the second articulation element (18) and is able, during the passage from one to the other of the open and closed positions, to selectively cooperate with the first front surface (34, 134, 234, 334) in order to remove the elastic slider (26) from the box-like body (22, 122, 222, 322).

8. Hinge as in any claim hereinbefore, **characterized in that** the elastic slider (26) provides elastic means (32) in a normally pre-loaded position.

9. Hinge as in claim 8, **characterized in that**, in the intermediate condition, the elastic means (32) is able to compress further with respect to its normally pre-loaded position, the passage beyond the intermediate condition being able to cause the elastic means (32) to return to its pre-loaded position, causing one or the other of the open or closed positions to be reached with a snap movement.

10. Hinge as in any claim hereinbefore, **characterized in that** it comprises a plurality of elastic sliders (26).

11. Hinge as in any claim hereinbefore, **characterized in that** the first articulation element (216) is integrated into the temple (212).

12. Spectacles comprising at least a hinge as in any claim hereinbefore.

## Patentansprüche

1. Doppeltwirkendes Federscharnier für eine Brille, welches umfasst: zwei Gelenkelemente (16, 116, 216; 18), die zu einer Hin- und Herbewegung gelenkig angeordnet sind, in Zuordnung zu dem Bügel (12, 112) und dem Rahmen (14) der Brille, um die Verschwenkung des Bügels (12, 212) gegenüber dem Rahmen (14) zwischen der offenen und der geschlossenen Position zu ermöglichen, wobei ein erstes Gelenkelement (16, 116, 216) einen kastenförmigen Körper (22, 122, 222, 322) umfasst, der eine erste Vorderfläche (34, 134, 234, 334) aufweist und in dem ein gefederter Schieber (26) verschiebbar eingehaust ist, und ein zweites Gelenkelement (18), das gegen den gefederten Schieber (26) drückt und das eine zweite geformte Vorderfläche (36) mit einem Nockenbereich (44, 144) hat, der dazu fähig ist, auf der ersten Vorderfläche (34, 134, 234, 334) zu gleiten, wobei ein Zwischenzustand in der Bewegung des Bügels (12, 112) und des Rahmens (14) vorgesehen ist, bei dem der Nockenbereich (44, 144) ein maximales Heraustreten (A2) des gefederten Schiebers (26) aus dem kastenförmigen Körper (22, 122, 222, 322) heraus bestimmt, **dadurch gekennzeichnet, dass** die erste Vorderfläche (34, 134, 234, 334) ein konvex geformtes Profil mit einem vorstehenden Bereich (42, 42a, 142, 242, 342) zur Außenseite des kastenförmigen Körpers (22) hin aufweist, wobei die zweite Vorderfläche (36) in einer Weise geformt ist, dass sie mit der ersten Vorderfläche (34, 134, 234, 334) zusammenpasst, um so eine Vertiefung (48) zu definieren, die auf einer Seite durch den Nockenbereich (44, 144) begrenzt ist und in der der vorstehende Bereich (42, 42a, 142, 242, 342) in dem stabilen Zustand angeordnet ist, in dem der Bügel (12, 212) bezüglich dem Rahmen (14) offen ist.

2. Scharnier nach Anspruch 1, **dadurch gekennzeichnet, dass** der vorstehende Bereich (42, 42a, 142, 242, 342) in dem Zwischenzustand direkt mit dem Nockenbereich (44, 144) zusammenarbeitet, um den Wert des maximalen Hervortretens (A2) des gefederten Schiebers (26) zu erhöhen.

3. Scharnier nach Anspruch 1 oder 2, **dadurch gekennzeichnet, dass** der vorstehende Bereich (42, 142, 342) in einer mittigen Position bezüglich einer Gehäuseachse (X) des in dem kastenförmigen Körper (22, 122) untergebrachten gefederten Schiebers (26) ausgebildet ist.

4. Scharnier nach Anspruch 1 oder 2, **dadurch gekennzeichnet, dass** der vorstehende Bereich (42a, 242) in einer nicht mittigen Position bezüglich der Gehäuseachse (X) des in dem kastenförmigen Körper (22) untergebrachten gefederten Schiebers (26) ausgebildet ist.

5. Scharnier nach einem der vorhergehenden Ansprüche, **dadurch gekennzeichnet, dass** die erste Vorderfläche (34, 134, 234) durch zwei geneigten Ebenen (38, 138; 40, 140) definiert ist, die zur Außenseite des kastenförmigen Körpers (22, 122, 222) hin zusammenlaufen, so dass der vorstehende Bereich durch eine vorstehende Kante oder "Nase" (42, 42a, 142, 242) definiert ist.

6. Scharnier nach einem der Ansprüche 1 bis 4, **dadurch gekennzeichnet, dass** die erste Vorderfläche (334) ein Profil mit einer gekrümmten Ausbildung ist, so dass der vorstehende Bereich durch einen Punkt eines maximalen Vorstehens (342) definiert ist.

7. Scharnier nach einem der vorhergehenden Ansprüche, **dadurch gekennzeichnet, dass** der Nockenbereich (44, 144) von dem Hauptteil des zweiten Gelenkelements (18) hervorsteht und dazu fähig ist, während des Übergangs von entweder der offenen in die geschlossene Position oder umgekehrt selektiv mit der ersten Vorderfläche (34, 134, 234, 334) zusammenzuarbeiten, um den gefederten Schieber (26) aus dem kastenförmigen Körper (22, 122, 222, 322) herauszuziehen.

8. Scharnier nach einem der vorhergehenden Ansprüche, **dadurch gekennzeichnet, dass** der gefederte Schieber (26) ein Federungsmittel (32) in einer normal vorgespannten Position vorsieht.

9. Scharnier nach Anspruch 8, **dadurch gekennzeichnet, dass** in dem Zwischenzustand das Federungsmittel (32) dazu fähig ist, weiter bezüglich seiner normal vorgespannten Position zusammengepresst zu werden, wobei die Bewegung über den Zwischenzustand hinaus dazu fähig ist zu bewirken, dass das Federungsmittel (32) in seine vorgespannte Position zurückkehrt, wodurch bewirkt wird, dass entweder die offene oder die geschlossene Position mit einer Schnappbewegung erreicht wird.

10. Scharnier nach einem der vorhergehenden Ansprüche, **dadurch gekennzeichnet, dass** es eine Vielzahl gefederter Schieber (26) umfasst.

11. Scharnier nach einem der vorhergehenden Ansprüche, **dadurch gekennzeichnet, dass** das erste Gelenkelement (216) in den Bügel (212) integriert ist.

12. Brille, die mindestens ein Scharnier nach einem der vorhergehenden Ansprüche umfasst.

## Revendications

1. Charnière élastique double action pour lunettes, qui comprend, associés à la branche (12, 112) et au tenon (14) des lunettes, deux éléments d'articulation (16, 116, 216 ; 18) assemblés par charnière avec faculté de va-et-vient pour permettre l'articulation de la branche (12, 212) par rapport au tenon (14) entre les positions ouverte et fermée, dont un premier élément d'articulation (16, 116, 216) comprend un corps en forme de boîtier (22, 122, 222, 322) qui comporte une première surface avant (34, 134, 234, 334) et à l'intérieur duquel une glissière élastique (26) est logée de façon coulissante, et un deuxième élément d'articulation (18) contraint à la glissière élastique (26) et qui comporte une deuxième surface avant formée (36) avec une région de came (44, 144) qui est capable de coulisser sur ladite première surface avant (34, 134, 234, 334), une condition intermédiaire étant fournie dans le déplacement de la branche (12, 112) et du tenon (14) dans laquelle la région de came (44, 144) détermine une émergence maximale (A2) de la glissière élastique (26) depuis le corps en forme de boîtier (22, 122, 222, 322), **caractérisée en ce que** la première surface avant (34, 134, 234, 334) présente un profil de forme convexe avec une région en saillie (42, 42a, 142, 242, 342) vers l'extérieur du corps en forme de boîtier (26), la deuxième surface avant (36) étant formée de manière à s'accoupler avec la première surface avant (34, 134, 234, 334) de manière à définir une concavité (48) délimitée sur un coté par la région de came (44, 144) et à l'intérieur de laquelle la région en saillie (42, 42a, 142, 242, 342) est placée dans la condition stable dans laquelle la branche (12, 212) est ouverte par rapport au tenon (14).

2. Charnière selon la revendication 1, **caractérisée en ce que**, dans ladite condition intermédiaire, la région en saillie (42, 42a, 142, 242, 342) coopère directement avec la région de came (44, 144) afin d'augmenter la valeur d'émergence maximale (A2) de la glissière élastique (26).

3. Charnière selon la revendication 1 ou 2, **caractérisée en ce que** la région en saillie (42, 142, 342) est ménagée dans une position centrale par rapport à un axe de logement (X) de la glissière élastique (26) dans le corps en forme de boîtier (22, 122).

4. Charnière selon la revendication 1 ou 2, **caractérisée en ce que** la région en saillie (42a, 242) est ménagée dans une position décentralisée par rapport à l'axe de logement (X) de la glissière élastique (26) dans le corps en forme de boîtier (22).

5. Charnière selon l'une quelconque des revendications précédentes, **caractérisée en ce que** la première surface avant (34, 134, 234) est définie par deux plans inclinés (38, 138 ; 40, 140) convergeant vers l'extérieur du corps en forme de boîtier (22, 122, 222), de sorte que ladite région en saillie est définie par un bord en saillie ou « nez » (42, 42a, 142, 242).

6. Charnière selon l'une quelconque des revendications 1 à 4, **caractérisée en ce que** la première surface avant (334) est un profil avec un développement curviligne, de sorte que ladite région en saillie est définie par un point de saillie maximale (342).

7. Charnière selon l'une quelconque des revendications précédentes, **caractérisée en ce que** la région de came (44, 144) fait saillie à partir de la masse du deuxième élément d'articulation (18) et est capable, pendant le passage de l'une à l'autre des positions ouverte et fermée, de coopérer sélectivement avec la première surface avant (34, 134, 234, 334) afin de retirer la glissière élastique (26) du corps en forme de boîtier (22, 122, 222, 322).

8. Charnière selon l'une quelconque des revendications précédentes, **caractérisée en ce que** la glissière élastique (26) fournit un moyen élastique (32) dans une position normalement préchargée.

9. Charnière selon la revendication 8, **caractérisée en ce que**, dans la condition intermédiaire, le moyen élastique (32) est capable de se comprimer davantage par rapport à sa position normalement préchargée, le passage au-delà de la condition intermédiaire étant capable de provoquer le retour du moyen élastique (32) à sa position préchargée, amenant l'une ou l'autre des positions ouverte et fermée à être atteinte par un mouvement de claquement.

10. Charnière selon l'une quelconque des revendications précédentes, **caractérisée en ce qu'**elle comprend une pluralité de glissières élastiques (26).

11. Charnière selon l'une quelconque des revendications précédentes, **caractérisée en ce que** le premier élément d'articulation (216) est intégré dans la branche (212).

12. Lunettes comprenant au moins un charnière selon l'une quelconque des revendications précédentes.
